# FASCICULE DE BREVET EUROPEEN

(11) **EP 0 686 451 B1**
(45) Date de publication et mention de la délivrance du brevet: **15.09.1999**
(21) Numéro de dépôt: 95420145.5
(22) Date de dépôt: 08.06.1995
(51) Int. Cl.: B23F 5/20, B23G 1/12, B23Q 5/04

(54) **Dispositif de taillage de pièces sur un tour**
Vorrichtung zum Schneiden von Werkstücken auf einer Drehmaschine
Device for cutting workpieces on a lathe

(30) Priorité: 09.06.1994 FR 9407399
(43) Date de publication de la demande: 13.12.1995
(73) Titulaire: GRADEL, Pierre, F-74130 Ayze (FR); Revillod Delisle, Serge, F-74970 Marignier (FR)
(72) Inventeur: GRADEL, Pierre, F-74130 Ayze (FR); Revillod Delisle, Serge, F-74970 Marignier (FR)
(74) Mandataire: Poncet, Jean-François

(56) Documents cités:
- EP-A- 0 451 131
- WO-A-93/16832
- CH-A- 370 306
- DE-A- 2 528 389
- US-A- 1 406 985
- US-A- 1 461 219
- US-A- 1 853 643
- MACHINERY, vol.74, no.1902, 1949, BURGESS HILL GB pages 446 - 448 'Thread-generating machine adapted for both threading and forming'

## Description

La présente invention concerne les tours selon le prèambule de la revendication 1 adaptés pour effectuer notamment le tournage de pièces à usiner, voir US-A 1 461 219.

Un tour conventionnel est une machine-outil comprenant un bâti portant au moins une broche porte-pièce mobile en rotation axiale sur le bâti, au moins un chariot porte-outil pouvant se déplacer en translation sur le bâti selon un axe de plongée radial perpendiculaire à l'axe de la broche et selon un axe de chariotage parallèle à l'axe de la broche.

Des moyens assurent le déplacement motorisé du chariot porte-outil selon l'axe de chariotage et éventuellement selon l'axe de plongée.

Une première transmission mécanique d'entraînement de broche porte-pièce permet d'entraîner sélectivement en rotation la broche porte-pièce à partir d'un moteur principal, selon une vitesse appropriée. La première transmission mécanique comporte généralement une boîte à vitesse d'entrée couplée au moteur principal et transmettant le mouvement à un arbre principal de tour lui-même couplé sélectivement à la broche porte-pièce, éventuellement par un embrayage de broche.

On peut généralement adapter sur le chariot porte-outil au moins une broche porte-outil tournante, entraînée en rotation par une transmission mécanique d'entraînement d'outil couplée au moteur principal, pour porter un outil de fraisage et l'entraîner en rotation selon une vitesse d'outil appropriée.

Les tours conventionnels non numériques comportent un arbre à cames, entraîné par le moteur principal, et commandant les mouvements relatifs du chariot porte-outil et de la broche porte-pièce, selon un cycle d'usinage adaptable. Un tel tour conventionnel peut comporter une seule broche, ou, de préférence plusieurs broches parallèles montées sur un barillet rotatif permettant de positionner une même pièce face à plusieurs chariots porte-outil successifs.

Les tours conventionnels non numériques permettent ainsi d'effectuer des usinages variés sur une pièce à usiner, tels que des tournages, perçages, fraisages. Toutefois, ces tours traditionnels non numériques ne peuvent pas aujourd'hui effectuer, sur la pièce à usiner, un taillage de filets longitudinaux ou de filets hélicoïdaux à pas important. Le taillage de filets longitudinaux ou hélicoïdaux à pas important permet par exemple le taillage d'engrenages par génération.

Le taillage des engrenages est habituellement réalisé sur des machines spécialisées, par exemple une machine telle que décrite dans le document US-A-1 461 219. Le document US-A-4 034 646 décrit une machine spécifique de fraisage. Le document US-A-5 150 518 décrit une machine spécifique de taillage de filets hélicoïdaux intérieurs et extérieurs. Cependant, ces machines spécialisées ne permettent pas de réaliser des usinages variés tels que le fraisage, le tournage et le perçage. Il en résulte que la réalisation d'une pièce comportant une opération de taillage de filets et d'autres opérations d'usinage nécessite une reprise, ce qui introduit nécessairement des défauts tels que des défauts de concentricité entre les diverses parties de la pièce. Il en résulte également une augmentation du coût de production de la pièce.

Le document WO-A-93/16832 décrit un tour sur lequel est monté un outil de tournage dentelé. Pendant le tournage, on pivote progressivement l'outil de tournage par rotation autour d'un axe non parallèle à l'axe de broche, et on donne à l'outil de tournage une rotation supplémentaire proportionnelle au déplacement de chariotage du chariot porte-outil sur lequel est monté l'outil de tournage.

Un tel dispositif permet de tailler, sur une pièce montée sur la broche d'un tour, des formes de révolution ou des filets hélicoïdaux à pas relativement faible. Il apparaît toutefois que ce dispositif n'est pas adapté pour tailler sur la pièce des filets droits en forme de cannelures ou des filets hélicoïdaux à pas important.

Il en est de même des dispositifs décrits dans les documents US-A-1 406 985, US-A-1 853 643, CH-A-370 306, qui sont adaptés au taillage de filets hélicoïdaux à pas relativement faible.

On notera également que le taillage de filets droits ou de filets hélicoïdaux peut être réalisé sur des tours à commande numérique. Cependant, il s'agit alors de machines particulièrement complexes et onéreuses, qui augmentent considérablement le prix de revient des pièces ainsi réalisées, de sorte qu'il est alors beaucoup plus économique de recourir aux machines traditionnelles spécialisées pour tailler des filets.

Le problème proposé par la présente invention est de concevoir un nouveau dispositif mécanique simple et peu onéreux permettant de réaliser, sur un tour traditionnel dépourvu de commande numérique, des pièces comportant des filets droits ou hélicoïdaux à pas important. On cherche ainsi à profiter des nombreuses possibilités d'usinage présentes sur un tour traditionnel, permettant de réaliser sur une même pièce non seulement les filets droits ou hélicoïdaux, mais également les autres formes obtenues par perçage, tournage, fraisage. La précision de la pièce obtenue est ainsi considérablement augmentée, et les opérations de taillage de filets peuvent être effectuées en temps masqué, ce qui réduit considérablement le coût de production, sans immobiliser une machine onéreuse.

Un autre objet de la présente invention est de profiter au maximum des éléments constitutifs du tour conventionnel, de façon à rajouter sur le tour un nombre d'organes minimum.

Pour atteindre ces objets la présente invention utilise un tour adapté pour effectuer notamment le tournage de pièces à usiner, ledit tour comprenant un bâti portant :
- au moins une broche porte-pièce mobile en rotation axiale sur le bâti,
- une première transmission mécanique d'entraînement de broche porte-pièce, comportant une boîte à vitesse d'entrée couplée à un moteur principal et transmettant le mouvement à un arbre principal de tour lui-même couplé sélectivement à la broche porte-pièce par un premier embrayage de broche, pour entraîner sélectivement en rotation la broche porte-pièce à partir du moteur principal selon une vitesse appropriée,
- au moins un chariot porte-outil, pouvant se déplacer en translation sur le bâti selon un axe de plongée radial perpendiculaire à l'axe de la broche porte-pièce et selon un axe de chariotage parallèle à l'axe de la broche porte-pièce, avec des moyens pour assurer le déplacement motorisé du chariot porte-outil selon l'axe de chariotage,
- au moins une broche porte-outil tournante adaptée sur le chariot porte-outil et entraînée en rotation par une transmission mécanique d'entraînement d'outil couplée au moteur principal, pour porter un outil de fraisage et l'entraîner en rotation selon une vitesse d'outil appropriée ;
   selon l'invention :
- la broche porte-outil tournante est montée sur le chariot porte-outil selon une orientation réglable,
- une seconde transmission mécanique d'entraînement de broche porte-pièce, comprenant une seconde boîte à vitesse couplée au moteur principal, transmet sélectivement le mouvement à la broche porte-pièce par l'intermédiaire d'un second embrayage de broche,
- ladite seconde transmission mécanique est adaptée pour entraîner en rotation la broche porte-pièce avec une démultiplication calculée et réglable permettant de choisir un rapport de rotation défini et entier entre la vitesse de rotation de l'outil de fraisage et la vitesse de rotation de la broche porte-pièce,
- ladite seconde transmission mécanique d'entraînement de broche porte-pièce comprend un dispositif mécanique de décalage angulaire, pour décaler angulairement la broche porte-pièce autour de son axe proportionnellement au déplacement de chariotage du chariot porte-outil, de sorte que l'outil de fraisage peut tailler dans la pièce des filets hélicoïdaux ou droits, dont le nombre est égal audit rapport de rotation.

Selon un mode de réalisation avantageux :
- le dispositif mécanique de décalage angulaire comprend un arbre intermédiaire de transmission rotatif, transmettant le mouvement dans ladite seconde transmission mécanique d'entraînement de broche porte-pièce, et formé de deux demi-arbres coaxiaux successifs couplés en rotation l'un à l'autre par un manchon de liaison coaxial coulissant,
- le manchon de liaison est couplé en rotation à une extrémité d'accouplement correspondante du premier demi-arbre par des premières dentures autorisant un déplacement relatif axial du manchon de liaison,
- le manchon de liaison est couplé en rotation à une extrémité d'accouplement correspondante du second demi-arbre par des secondes dentures autorisant un déplacement relatif axial du manchon de liaison,
- le manchon de liaison est entraîné directement ou indirectement en translation axiale par le chariot porte-outil, auquel il est relié par une liaison mécanique autorisant sa rotation.

Dans une première application, les premières et secondes dentures sont des cannelures, pour produire entre l'outil de fraisage et la broche porte-pièce, un décalage angulaire constant et indépendant du déplacement en chariotage du chariot porte-outil et du manchon de liaison. On réalise ainsi, sur la pièce à usiner, des filets longitudinaux ou cannelures.

Selon une seconde application, les premières et/ou secondes dentures sont hélicoïdales, pour produire sur la broche porte-pièce un décalage angulaire proportionnel au déplacement en chariotage du chariot porte-outil et du manchon de liaison. On réalise ainsi sur la pièce à usiner des filets hélicoïdaux.

D'autres objets, caractéristiques et avantages de la présente invention ressortiront de la description suivante de modes de réalisation particuliers, faite en relation avec les figures jointes, parmi lesquelles:
- la figure 1 est une vue schématique générale d'un tour conventionnel à commande mécanique, modifié selon l'invention ;
- la figure 2 illustre la cinématique d'un tour multibroche conventionnel modifié selon l'invention
- la figure 3 illustre en perspective un outil de fraisage taillant un filet sur la surface latérale d'une pièce à usiner sur un tour modifié selon l'invention ;
- la figure 4 est une coupe longitudinale du manchon de liaison adapté sur les extrémités des deux demi-arbres sur un tour modifié selon l'invention; et
- la figure 5 est une vue en bout du barillet porte-broches d'un tour multibroche modifié selon l'invention, avec un dispositif d'embrayage à bascule.

Selon l'invention, on utilise pour le taillage de pièces un tour conventionnel mécanique, pouvant être un tour monobroche ou un tour multibroche, dépourvu de commande numérique. A titre d'exemple, les dessins représentent un mode de réalisation à tour multibroche.

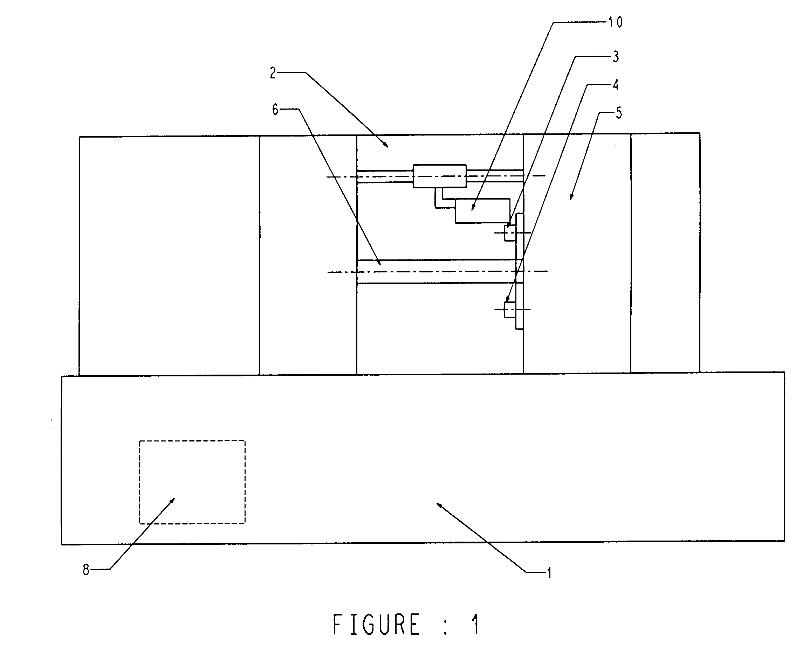

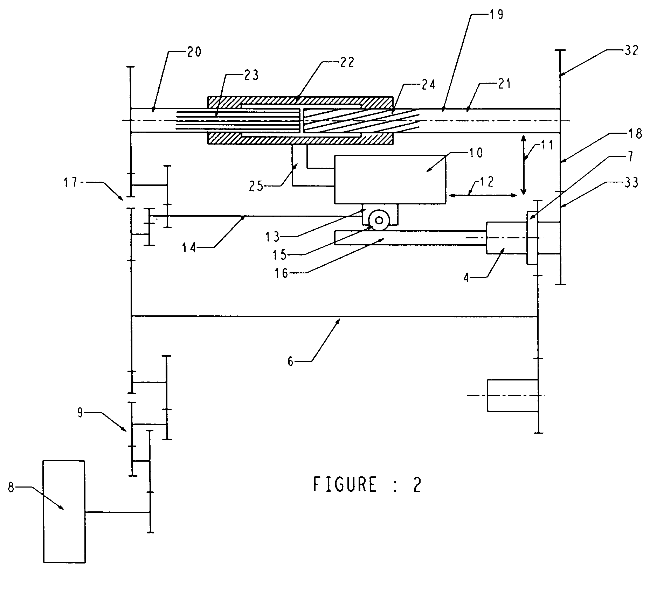

On peut a priori utiliser, selon l'invention, n'importe quelle structure de tour conventionnel mécanique monobroche ou multibroche. Un exemple de disposition des organes essentiels d'un tel tour traditionnel est donné sur les figures 1 et 2.

Dans la réalisation illustrée sur ces figures 1 et 2, le tour conventionnel comprend un bâti 1 portant l'ensemble des organes du tour. L'usinage de la pièce s'effectue dans une zone d'usinage centrale 2, généralement accessible par l'utilisateur pour le réglage des outils. Dans la zone d'usinage 2, on distingue deux broches porte-pièce 3 et 4, montées sur un barillet porte-broche rotatif monté dans un bâti de barillet 5. Le barillet comporte un dispositif de transmission mécanique pour entraîner en rotation les broches porte-pièce 3 et 4 à partir d'un arbre principal 6 traversant la zone d'usinage 2. L'arbre principal de tour 6 est couplé sélectivement à la broche porte-pièce 4 par un premier embrayage de broche 7, illustré sur la figure 2, pour entraîner sélectivement en rotation la broche porte-pièce 4 selon une vitesse appropriée lors des opérations d'usinage traditionnelles du tour.

L'autre extrémité de l'arbre principal 6 reçoit le mouvement d'un moteur principal de tour 8 par l'intermédiaire d'une boîte à vitesse d'entrée 9.

Ainsi, la boîte à vitesse d'entrée 9, l'arbre principal de tour 6 et le premier embrayage de broche 7 constituent une première transmission mécanique de broche porte-pièce 4, transmission utilisée pour les opérations d'usinage traditionnelles du tour.

Le tour multibroche comporte généralement plusieurs chariots porte-outil, par exemple le chariot porte-outil 10, pouvant se déplacer en translation sur le bâti 1 selon un axe de plongée radial 11 perpendiculaire à l'axe de la broche 4 et selon un axe de chariotage 12 parallèle à l'axe de la broche 4. Les moyens traditionnels du tour, non représentés sur les figures, assurent le déplacement motorisé du chariot porte-outil 10 selon l'axe de chariotage 12.

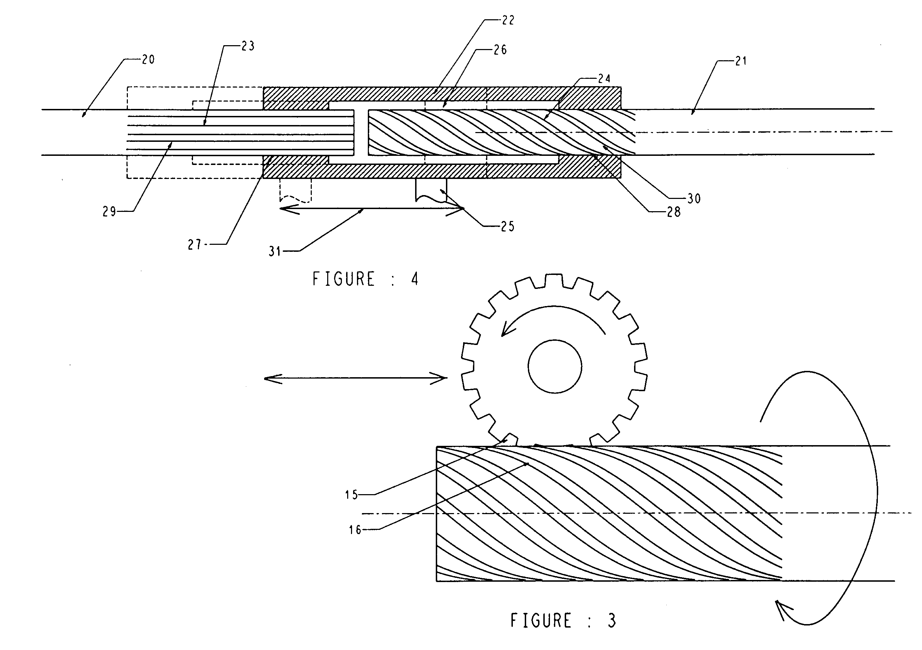

On adapte, sur le chariot porte-outil 10, une broche porte-outil tournante 13 entraînée en rotation par une transmission mécanique d'entraînement d'outil 14 couplée au moteur principal 8. La broche porte-outil tournante 13 porte un outil de fraisage 15, qui est ainsi entraîné en rotation selon une vitesse d'outil appropriée choisie en fonction de la vitesse de coupe nécessaire. Comme illustré sur la figure 2, et à plus grande échelle sur la figure 3, l'outil de fraisage 15 s'engage sur la surface de la pièce à usiner 16 portée par la broche porte-pièce 4.

La broche porte-outil tournante 13 est montée sur le chariot porte-outil 10 selon une orientation réglable, que l'on règle en fonction du pas des filets que l'on veut réaliser sur la pièce 16.

Pour tailler les filets selon l'invention, on prévoit en outre une seconde transmission mécanique d'entraînement de broche porte-pièce, comprenant une seconde boîte à vitesse 17 couplée au moteur principal 8, de préférence couplée à la première boîte à vitesse 9 pour utiliser les possibilités de réduction de cette première boîte à vitesse 9. La seconde boîte à vitesse 17 transmet sélectivement le mouvement à la broche porte-pièce 4 par des moyens de transmission comportant un second embrayage de broche 18. Naturellement, on s'arrange pour que la broche porte-pièce 4 soit entraînée alternativement soit par la première transmission mécanique comprenant l'arbre principal 6 du tour, soit par la seconde transmission mécanique comprenant la seconde boîte à vitesse 17 et le second embrayage de broche 18. Pour cela, lorsque l'on veut tailler les filets selon l'invention, le premier embrayage de broche 7 est débrayé, et le second embrayage de broche 18 est embrayé.

La seconde transmission mécanique est adaptée pour entraîner en rotation la broche porte-pièce 4 avec une démultiplication calculée et réglable, en fonction des rapports choisis de la seconde boîte à vitesse 17, permettant de choisir un rapport de rotation défini et entier entre la vitesse de rotation de l'outil de fraisage 15 et la vitesse de rotation de la broche porte-pièce 4.

La seconde transmission mécanique d'entraînement de broche porte-pièce 4 comprend un dispositif mécanique de décalage angulaire pour décaler angulairement la broche porte-pièce autour de son axe proportionnellement au déplacement de chariotage du chariot porte-outil 10. Pour cela, dans le mode de réalisation représenté, un arbre intermédiaire de transmission rotatif 19 transmet le mouvement depuis la sortie de la seconde boîte à vitesse 17 jusqu'au second embrayage 18. L'arbre intermédiaire de transmission rotatif 19 est formé de deux demi-arbres 20 et 21 coaxiaux successifs, couplés en rotation l'un à l'autre par un manchon de liaison 22 coaxial coulissant.

Le manchon de liaison 22 est couplé en rotation à l'extrémité d'accouplement correspondante 23 du premier arbre 20 par des premières dentures autorisant un déplacement relatif axial du manchon 22 sur le premier demi-arbre 20. De même, le manchon de liaison 22 est couplé en rotation à l'extrémité d'accouplement correspondante 24 du second demi-arbre 21 par des secondes dentures autorisant un déplacement relatif axial du manchon 22 sur le second demi-arbre 21.

Le manchon de liaison 22 est entraîné en translation axiale par le chariot porte-outil 10, auquel il est relié par une liaison mécanique 25.

Le manchon de liaison 22 est démontable et éventuellement interchangeable.

De même, les demi-arbres 20 et 21 peuvent avantageusement être démontables et interchangeables, au moins pour ce qui concerne leurs extrémités d'accouplement 23 et 24 au manchon de liaison 22.

De cette façon, on peut modifier les dentures reliant le manchon de liaison 22 et les demi-arbres 20 et 21, pour modifier le pas des filets taillés sur la pièce à usiner 16.

Dans une première application, les premières et secondes dentures sont des cannelures. Dans ce cas, et quelle que soit la position du chariot porte-outil 10, le second demi-arbre 21 conserve une position angulaire constante par rapport au premier demi-arbre 20. On produit ainsi entre l'outil de fraisage 15 et la broche porte-pièce 4 un décalage angulaire constant et indépendant du déplacement en chariotage du chariot porte-outil 10 et du manchon de liaison 22.

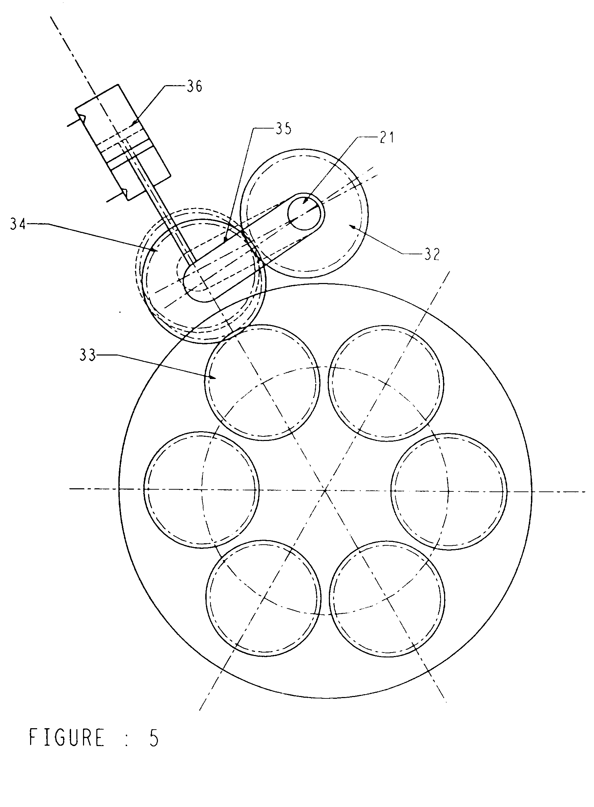

Selon une seconde application, les premières et/ou secondes dentures sont hélicoïdales. A titre d'exemple, on a représenté sur la figure 4 un mode de réalisation de manchon de liaison 22, comportant une partie centrale 26 évidée, à diamètre intérieur plus important, et deux parties d'extrémité 27 et 28 dont les diamètres s'adaptent aux diamètres respectifs du premier demi-arbre 20 et du second demi-arbre 21. La première partie d'extrémité 27 comporte des cannelures, engrenant sur des cannelures correspondantes 29 du premier demi-arbre 20. La seconde extrémité 28 comporte une denture hélicoïdale engrenant sur une denture hélicoïdale correspondante 30 du second demi-arbre 21. On comprend que, lorsque le manchon de liaison 22 est déplacé axialement comme illustré par les flèches 31, sous l'action de la liaison mécanique 25 le reliant au chariot porte-outil 10, le manchon de liaison 22 reste solidaire en rotation du premier demi-arbre 20, et il produit sur le second demi-arbre 21 une rotation relative commandée par les dentures hélicoïdales 30, proportionnellement au déplacement axial du manchon de liaison 22.

Les dentures hélicoïdales 30 présentent nécessairement un pas relativement important, permettant le glissement sur la denture correspondante de la seconde partie d'extrémité 28 du manchon de liaison 22. Ainsi, ce mode de réalisation de manchon 22 à cannelures et dentures hélicoïdales convient pour la réalisation de filets dont le pas est important.

Pour réduire le pas des filets réalisés sur la pièce 16, on peut utiliser un manchon 22 comportant également des dentures hélicoïdales dans la première partie d'extrémité 27, avec des dentures hélicoïdales correspondantes à la place des cannelures 29 du premier demi-arbre 20. On peut ainsi réduire de moitié le pas du filet réalisé sur la pièce 16.

Dans le mode de réalisation représenté sur la figure 2, les demi-arbres 20 et 21 sont parallèles à la broche porte-pièce 4, et le manchon de liaison 22 est directement solidaire en translation axiale du chariot porte-outil 10. La liaison 25 autorise la libre rotation du manchon de liaison 22 autour de son axe. Le manchon de liaison 22 est disposé dans la zone d'usinage 2 du tour, zone dans laquelle il est directement accessible pour son réglage et son changement.

Le second demi-arbre 21 est couplé à la broche porte-pièce 4 par une transmission à roues dentées, comprenant une première roue dentée 32 couplée au demi-arbre 21 et une seconde roue dentée 33 couplée à la broche porte-pièce 4.

De préférence, comme illustré sur la figure 5, le second embrayage de broche 18 est également constitué par des engrenages à roues dentées : la première roue dentée 32 est couplée en bout du second demi-arbre 21 et engrène sur une roue dentée mobile 34 montée sur une bascule 35 pivotant autour de l'axe de la première roue dentée 32. La bascule 35 est mobile entre une première position, illustrée en traits pleins sur la figure 5, dans laquelle la roue dentée mobile 34 engrène sur la seconde roue dentée 33 montée en bout d'arbre de la broche porte-pièce 4, et une seconde position de retrait illustrée en traits mixtes dans laquelle la roue dentée mobile 34 est à l'écart de la seconde roue dentée 33 pour le débrayage. La bascule 35 est déplacée par un vérin de commande 36, entre l'une et l'autre de ses positions embrayée et débrayée.

La transmission par les roues dentées 32, 33 et 34 du second embrayage de broche 18 peut avoir un rapport égal à un comme illustré sur la figure 5, ou un rapport différent de un, par exemple avantageusement supérieur à un comme illustré sur la figure 2.

Le fonctionnement du tour modifié selon l'invention est le suivant : l'outil de fraisage 15 et la broche porte-pièce 4 sont entraînés en rotation, par le même moteur principal 8 de tour, de façon synchronisée, en choisissant un rapport approprié de la seconde boîte de vitesse 17, de façon que le rapport de rotation soit un nombre entier. Ce rapport de rotation définit le nombre de dents ou de filets que l'on veut tailler sur la pièce 16. On débraye le premier embrayage 7, déconnectant ainsi la broche porte-pièce 4 par rapport à l'arbre principal 6 du tour. On choisit un manchon de liaison 22 et des demi-arbres 20 et 21 de façon que les dentures du manchon 22 et des demi-arbres 20 et 21 définissent le pas désiré des filets à tailler sur la pièce 16. L'outil de fraisage 15, entraîné par le moteur principal 8 et sa transmission 14, se trouve ainsi entraîné en rotation synchrone par rapport à la broche porte-pièce 4, lorsque le chariot porte-outil 10 est immobile. Le déplacement de chariotage du chariot porte-outil 10 selon l'axe de chariotage 12 provoque le déplacement simultané du manchon de liaison 22. Dans le cas de dentures hélicoïdales entre le manchon de liaison 22 et les demi-arbres 20 et 21, et lorsque la transmission par les roues dentées 32, 33, 34 a un rapport égal à un, le déplacement simultané du manchon de liaison 22 provoque une rotation relative supplémentaire du second demi-arbre 21, des roues 32 et 33 et de la broche porte-pièce 4, rotation relative supplémentaire qui est proportionnelle au déplacement du chariot porte-outil 10. Il en résulte que l'outil de fraisage 15 taille dans la pièce 16 des filets hélicoïdaux dont l'angle par rapport à l'axe longitudinal est égal à la somme des angles formés par les dentures hélicoïdales des demi-arbres 20 et 21. On réalise ainsi un angle d'hélice connu avec une précision parfaite. Pour augmenter encore l'angle d'hélice, on peut utiliser une transmission par roues dentées 32, 33, 34 dont le rapport est supérieur à un, facilitant ainsi le glissement des dentures hélicoïdales des demi-arbres 20 et 21.

Dans le cas d'un tour multibroche, on peut équiper l'un au moins des postes de travail avec le dispositif de l'invention. Les autres postes de travail peuvent par exemple être équipés de manière conventionnelle, avec des outils de tournage, de perçage ou de fraisage, de façon à réaliser sur une même pièce 16 plusieurs usinages successifs, en temps masqué, sans démonter la pièce.

La présente invention n'est pas limitée aux modes de réalisation qui ont été explicitement décrits, mais elle en inclut les diverses variantes et généralisations contenues dans le domaine des revendications ci-après.

## Revendications

1. Tour adapté pour effectuer notamment le tournage de pièces à usiner (16), ledit tour comprenant un bâti (1) portant :
- au moins une broche porte-pièce (4) mobile en rotation axiale sur le bâti (1),
- une première transmission mécanique (9,6,7) d'entraînement de broche porte-pièce (4), comportant une boîte à vitesse d'entrée (9) couplée à un moteur principal (8) et transmettant le mouvement à un arbre principal de tour (6) lui-même couplé sélectivement à la broche porte-pièce (4) par un premier embrayage de broche (7), pour entraîner sélectivement en rotation la broche porte-pièce (4) à partir du moteur principal (8) selon une vitesse appropriée,
- au moins un chariot porte-outil (10), pouvant se déplacer en translation sur le bâti(1) selon un axe de plongée radial (11) perpendiculaire à l'axe de la broche porte-pièce (4) et selon un axe de chariotage (12) parallèle à l'axe de la broche porte-pièce (4), avec des moyens pour assurer le déplacement motorisé du chariot porte-outil (10) selon l'axe de chariotage (12),
- au moins une broche porte-outil tournante (13) adaptée sur le chariot porte-outil (10) et entraînée en rotation par une transmission mécanique d'entraînement d'outil (14) couplée au moteur principal (8), pour porter un outil de fraisage (15) et l'entraîner en rotation selon une vitesse d'outil appropriée,
caractérisé en ce que :
- la broche porte-outil tournante (13) est montée sur le chariot porte-outil (10) selon une orientation réglable,
- une seconde transmission mécanique d'entraînement de broche porte-pièce, comprenant une seconde boîte à vitesse (17) couplée au moteur principal (8), transmet sélectivement le mouvement à la broche porte-pièce (4) par l'intermédiaire d'un second embrayage de broche (18),
- ladite seconde transmission mécanique est adaptée pour entraîner en rotation la broche porte-pièce (4) avec une démultiplication calculée et réglable permettant de choisir un rapport de rotation défini et entier entre la vitesse de rotation de l'outil de fraisage (15) et la vitesse de rotation de la broche porte-pièce (4),
- ladite seconde transmission mécanique d'entraînement de broche porte-pièce (4) comprend un dispositif mécanique (20,21,22) de décalage angulaire, pour décaler angulairement la broche porte-pièce (4) autour de son axe proportionnellement au déplacement de chariotage (12) du chariot porte-outil (10), de sorte que l'outil de fraisage (15) peut tailler dans la pièce (16) des filets hélicoïdaux ou droits, dont le nombre est égal audit rapport de rotation.

2. Tour selon la revendication 1, caractérisé en ce que :
- le dispositif mécanique de décalage angulaire comprend un arbre intermédiaire de transmission rotatif (19), transmettant le mouvement dans ladite seconde transmission mécanique d'entraînement de broche porte-pièce (4), et formé de deux demi-arbres (20,21) coaxiaux successifs couplés en rotation l'un à l'autre par un manchon de liaison (22) coaxial coulissant,
- le manchon de liaison (22) est couplé en rotation à une extrémité d'accouplement correspondante (23) du premier demi-arbre (20) par des premières dentures (29) autorisant un déplacement relatif axial du manchon de liaison (22),
- le manchon de liaison (22) est couplé en rotation à une extrémité d'accouplement correspondante (24) du second demi-arbre (21) par des secondes dentures (30) autorisant un déplacement relatif axial du manchon de liaison (22),
- le manchon de liaison (22) est entraîné directement ou indirectement en translation axiale par le chariot porte-outil (10), auquel il est relié par une liaison mécanique (25) autorisant sa rotation.

3. Tour selon la revendication 2, caractérisé en ce que les premières et secondes (30) dentures sont des cannelures, pour produire entre l'outil de fraisage (15) et la broche porte-pièce (4) un décalage angulaire constant et indépendant du déplacement en chariotage (12) du chariot porte-outil (10) et du manchon de liaison (22).

4. Tour selon la revendication 2, caractérisé en ce que les premières (29) et/ou secondes (30) dentures sont hélicoïdales, pour produire sur la broche porte-pièce (4) un décalage angulaire proportionnel au déplacement en chariotage (12) du chariot porte-outil (10) et du manchon de liaison (22).

5. Tour selon l'une quelconque des revendications 1 à 4, caractérisé en ce que le manchon de liaison (22) est démontable et interchangeable.

6. Tour selon l'une quelconque des revendications 2 à 5, caractérisé en ce que les demi-arbres (20, 21) sont démontables et interchangeables au moins en ce qui concerne leurs extrémités d'accouplement (23, 24) au manchon de liaison (22).

7. Tour selon l'une quelconque des revendications 2 à 6, caractérisé en ce que les demi-arbres (20, 21) sont parallèles à la broche porte-pièce (4), et le manchon de liaison (22) est solidaire en translation axiale du chariot porte-outil (10).

8. Tour selon l'une quelconque des revendications 2 à 7, caractérisé en ce que le manchon de liaison (22) est disposé dans la zone d'usinage (2) du tour.

9. Tour selon l'une quelconque des revendications 1 à 8, caractérisé en ce que le second embrayage de broche (18) comprend une première roue dentée (32) et une roue dentée mobile (34) engrenant l'une avec l'autre, la roue dentée mobile (34) étant montée sur une bascule (35) mobile en rotation autour de l'axe de la première roue dentée (32), ladite première roue dentée (32) étant sollicitée en rotation par la seconde transmission mécanique, ladite roue mobile (34) venant sélectivement engrener sur une seconde roue dentée (33) montée en bout d'arbre de broche porte-pièce (4) lorsque la bascule (35) est en position embrayée, et s'écartant de ladite seconde roue dentée (33) lorsque la bascule (35) est en position débrayée.

10. Tour selon la revendication 9, caractérisé en ce que la transmission par roues dentées (32, 33, 34) du second embrayage de broche (18) a un rapport supérieur à un.

## Claims

1. Lathe for carrying out various machining operations on workpieces (16), including turning, said lathe comprising a frame (1) carrying:
- at least one workpiece support spindle (4) rotatable about its axis on the frame (1),
- a first mechanical transmission (9, 6, 7) for driving the workpiece support spindle (4), including a feed gearbox (9) coupled to a main motor (8) and driving a feed shaft (6) of the lathe itself coupled selectively to the workpiece support spindle (4) by a first spindle clutch (7), selectively to rotate the workpiece support spindle (4) at an appropriate speed from the main motor (8),
- at least one toolholder carriage (10), mobile in translation on the frame (1) along a radial crossfeed axis (11) perpendicular to the axis of the workpiece support spindle (4) and along a feed axis (12) parallel to the axis of the workpiece support spindle (4), with drive means for displacing the toolholder carriage (10) along the feed axis (12),
- at least one rotary toolholder spindle (13) adapted on the toolholder carriage (10) and rotated by a tool drive mechanical transmission (14) coupled to the main motor (8), to carry a milling tool (15) and to rotate it at an appropriate tool speed,
characterized in that :
- the orientation of the rotary toolholder spindle (13) on the toolholder carriage (10) is adjustable,
- a second mechanical transmission for driving the workpiece support spindle, comprising a second gearbox (17) coupled to the main motor (8), selectively rotates the workpiece support spindle (4) via a second spindle clutch (18),
- said second mechanical transmission is adapted to rotate the workpiece support spindle (4) with a demultiplication ratio calculated and adjustable to obtain a particular integer ratio between the rotation speed of the milling tool (15) and the rotation speed of the workpiece support spindle (4),
- said second mechanical transmission for driving the workpiece support spindle (4) comprises a mechanical angular offset device (20, 21, 22), for angularly offsetting the workpiece support spindle (4) about its axis by an amount proportional to the displacement of the toolholder carriage (10) along the feed axis (12), so that the milling tool (15) can cut in the workpiece (16) helical or straight threads the number of which is equal to said ratio of rotation.

2. Lathe according to claim 1 characterized in that :
- the mechanical angular offset device comprises an intermediate rotative transmission shaft (19), transmitting the movement in said second mechanical transmission of the workpiece support spindle (4), and formed of two successive coaxial half-shafts (20, 21) coupled together to rotate together by a sliding coaxial coupling sleeve (22),
- the coupling sleeve (22) is rotationally coupled to a corresponding coupling end (23) of the first half-shaft (20) by first teeth (29) allowing axial relative displacement of the coupling sleeve (22),
- the coupling sleeve (22) is rotationally coupled to a corresponding coupling end (24) of the second half-shaft (21) by second teeth (30) allowing axial relative displacement of the coupling sleeve (22),
- the coupling sleeve (22) is displaced in axial translation directly or indirectly by the toolholder carriage (10) to which it is coupled by a mechanical coupling (25) allowing it to rotate.

3. Lathe according to claim 2, characterized in that the first and second teeth (30) are splines, to produce an angular offset between the milling tool (15) and the workpiece support spindle (4) that is constant and independent of the displacement of the toolholder
carriage (10) and the coupling sleeve (22) along the feed axis (12).

4. Lathe according to claim 2, characterized in that the first teeth (29) and/or the second teeth (30) are helical teeth, to impart to the workpiece support spindle (4) an angular offset proportional to the displacement of the toolholder carriage (10) and the coupling sleeve (22) along the feed axis (12).

5. Lathe according to any one of claims 1 to 4, characterized in that the coupling sleeve (22) is demountable and interchangeable.

6. Lathe according to any one of claims 2 to 5, characterized in that at least the coupling ends (23, 24) of the half-shafts (20, 21) coupled to the coupling sleeve (22) are demountable and interchangeable.

7. Lathe according to any one of claims 2 to 6, characterized in that the half-shafts (20, 21) are parallel to the workpiece support spindle (4), and the coupling sleeve (22) is fastened to the toolholder carriage (10) so as to move in axial translation with it.

8. Lathe according to any one of claims 2 to 7, characterized in that the coupling sleeve (22) is situated in the machining area (2) of the lathe.

9. Lathe according to any one of claims 1 to 8, characterized in that the second spindle clutch (18) comprises a first toothed wheel (32) and a mobile toothed wheel (34) meshing with each other, the mobile toothed wheel (34) being mounted on a swing-arm (35) rotatable about the axis of the first toothed wheel (32), said first toothed wheel (32) being rotated by the second mechanical transmission, said mobile wheel (34) selectively meshing with a second toothed wheel (33) mounted at the end of the workpiece support spindle (4) when the swing-arm (35) is in a clutch engaged position, and being held away from said second toothed wheel (33) when the swing-arm (35) is in a clutch disengaged position.

10. Lathe according to claim 9, characterized in that the transmission ratio of the toothed wheels (32, 33, 34) of the second spindle clutch (18) is greater than unity.

## Patentansprüche

1. Drehmaschine, insbesondere zur Drehbearbeitung von Werkstücken (16), wobei die Drehmaschine ein Gehäuse (1) aufweist, mit:
- mindestens einer Werkstückträgerspindel (4), die drehbeweglich bezüglich einer Achse des Gehäuses (1) ist,
- einem ersten mechanischen Getriebe (9, 6, 7) zum Antrieb der Werkstückträgerspindel (4), das eine Eingangsgetriebestufe (9) aufweist, welche mit einem Hauptmotor (8) gekoppelt ist und die Bewegung auf eine Hauptwelle (6) der Drehmaschine überträgt, die wiederum wahlweise mit der Werkstückträgerspindel (4) durch eine erste Spindelkupplung (7) koppelbar ist, zum wahlweisen Drehantreiben der Werkstückträgerspindel (4), ausgehend vom Hauptmotor (8), mit einer geeigneten Geschwindigkeit,
- mindestens einem Werkzeugträgerschlitten (10), der translatorisch verschieblich bezüglich des Gehäuses (1) ist, entlang einer radialen Vorschubachse (11), die senkrecht zur Achse der Werkstückträgerspindel (4) ist und entlang einer Drehachse (12), die parallel zur Achse der Werkstückträgerspindel (4) ist, mit Mitteln zum Sicherstellen der motorisierten Bewegung des Werkzeugträgerschlittens (10) entlang der Schlittenachse (12),
- mindestens einer drehbaren Werkzeugträgerspindel (13), die auf dem Werkzeugträgerschlitten (10) vorgesehen und durch ein mechanisches Getriebe (14) zum Drehantrieb des Werkzeugs rotatorisch angetrieben und mit dem Hauptmotor (8) gekoppelt ist, zum Halten eines Fräswerkzeugs (15) und Drehantreiben desselben mit einer geeigneten Werkzeuggeschwindigkeit,
dadurch gekennzeichnet, daß:
- die sich drehende Werkzeugträgerspindel (13) auf dem Werkzeugträgerschlitten (10) in einer Richtung angeordnet ist, die verstellbar ist,
- ein zweites mechanisches Getriebe zum Antrieb der Werkstückträgerspindel vorgesehen ist, das eine zweite Getriebestufe (17) aufweist, welche mit dem Hauptmotor (8) gekoppelt ist, und das wahlweise die Bewegung auf die Werkstückträgerspindel (4) über eine dazwischenliegende zweite Spindelkupplung (18) überträgt,
- das zweite mechanische Getriebe dazu vorgesehen ist, die Werkzeugträgerspindel (4) mit einer berechneten und regulierbaren Untersetzung rotatorisch anzutreiben, was die Wahl eines definierten und ganzzahligen Drehzahlverhältnisses zwischen der Drehzahl des Fräswerkzeugs (15) und der Drehzahl der Werkstückträgerspindel (4) ermöglicht,
- das zweite mechanische Getriebe zum Antrieb der Werkstückträgerspindel (4) eine mechanische Winkelverstellvorrichtung (20, 21, 22) aufweist, zum Verstellen des Winkels der Werkstückträgerspindel (4) bezüglich ihrer Achse, proportional zur Verschiebung in Drehrichtung (12) des Werkzeugträgerschlittens (10), so daß das Fräswerkzeug (15) in das Werkstück (16) schraubenförmige oder gerade Nuten schneiden kann, wobei die Anzahl gleich dem Drehzahlverhältnis ist.

2. Drehmaschine nach Anspruch 1, dadurch gekennzeichnet, daß:
- die mechanische Winkelverstelleinrichtung eine Zwischenwelle (19) zur Drehbewegungsübertragung aufweist, welche die Bewegung im zweiten zum Antrieb der Werkstückträgerspindel (4) vorgesehenen mechanischen Getriebe überträgt, und durch zwei koaxiale hintereinander angeordnete Halbwellen (20, 21) gebildet ist, die rotatorisch miteinander durch eine koaxial verschiebliche Verbindungsmuffe (22) gekoppelt sind,
- die Verbindungsmuffe (22) rotatorisch mit einem entsprechenden Kupplungsende (23) der ersten Halbwelle (20) durch erste Verzahnungen (29) gekoppelt ist, die eine axiale Relativverschiebung der Verbindungsmuffe (22) ermöglichen,
- die Verbindungsmuffe (22) rotatorisch mit einem entsprechenden Kupplungsende (24) der zweiten Halbwelle (21) gekoppelt ist, durch zweite Verzahnungen (30), die eine Relativverschiebung der Verbindungsmuffe (22) ermöglichen,
- die Verbindungsmuffe (22) direkt oder indirekt translatorisch axial durch den Werkzeugträgerschlitten (10) bewegt wird, mit dem sie über eine mechanische Verbindung (25) verbunden ist, welche ihre Drehung gestattet.

3. Drehmaschine nach Anspruch 2, dadurch gekennzeichnet, daß die ersten und zweiten Verzahnungen (30) Rillen sind, zum Erzeugen einer konstanten und von der Drehverschiebung (12) des Werkzeugträgerschlittens (10) und der Verbindungsmuffe (22) unabhängigen Winkelstellung zwischen dem Fräswerkzeug (15) und der Werkzeugträgerspindel (4).

4. Drehmaschine nach Anspruch 2, dadurch gekennzeichnet, daß die ersten (29) und/oder zweiten (30) Verzahnungen schraubenförmig sind, um auf der Werkstückträgerspindel (4) eine Winkelstellung zu erzeugen, die proportional zur Verschiebung in Drehrichtung (12) des Werkzeugträgerschlittens (10) und der Verbindungsmuffe (22) ist.

5. Drehmaschine nach einem der Ansprüche 1 bis 4, dadurch gekennzeichnet,
daß die Verbindungsmuffe (22) demontierbar und auswechselbar ist.

6. Drehmaschine nach einem der Ansprüche 2 bis 5, dadurch gekennzeichnet,
daß die Halbwellen (20, 21) demontierbar und auswechselbar sind, zumindest was ihre Kupplungsenden (23, 24) mit der Verbindungsmuffe (22) betrifft.

7. Drehmaschine nach einem der Ansprüche 2 bis 6, dadurch gekennzeichnet,
daß die Halbwellen (20, 21) parallel zur Werkstückträgerspindel (4) sind,und die Verbindungsmuffe (22) translatorisch axial mit dem Werkzeugträgerschlitten (10) verbunden ist.

8. Drehmaschine nach einem der Ansprüche 2 bis 7, dadurch gekennzeichnet,
daß die Verbindungsmuffe (22) im Arbeitsbereich (2) der Drehmaschine angeordnet ist.

9. Drehmaschine nach einem der Ansprüche 1 bis 8, dadurch gekennzeichnet,
daß die zweite Spindelkupplung (18) ein erstes Zahnrad (32) und ein bewegliches Zahnrad (34) aufweist, die ineinander eingreifen, wobei das bewegliche Zahnrad (34) an einer Wippe (35) montiert ist, die rotatorisch um die Achse des ersten Zahnrades (32) beweglich ist, wobei das erste Zahnrad (32) rotatorisch durch das zweite mechanische Getriebe angetrieben wird, wobei das bewegliche Zahnrad (34) wahlweise in ein zweites Zahnrad (33) eingreift, das am Ende der Welle der Werkstückträgerspindel (4) angeordnet ist, wenn die Wippe (35) in Eingriffstellung ist, und vom zweiten Zahnrad (33) weggerückt ist, wenn die Wippe (35) in der ausgerückten Stellung ist.

10. Drehmaschine nach Anspruch 9, dadurch gekennzeichnet, daß die Übersetzung durch die Zahnräder (32, 33, 34) der zweiten Kupplungsspindel (18) ein Übersetzungsverhältnis hat, das größer als eins ist.
